# EUROPÄISCHE PATENTSCHRIFT

(11) **EP 1 854 669 B1**
(45) Veröffentlichungstag und Bekanntmachung des Hinweises auf die Patenterteilung: **16.01.2013**
(21) Anmeldenummer: 07009287.9
(22) Anmeldetag: 09.05.2007
(51) Int. Cl.: B60R 1/06, B29C 44/12, B29C 45/14, B29L 31/30, B29L 11/00

(54) **Aussenspiegel für ein Kraftfahrzeug**
External mirror for a motor vehicle
Rétroviseur extérieur pour un véhicule

(30) Priorität: 12.05.2006 DE 102006022618
(43) Veröffentlichungstag der Anmeldung: 14.11.2007
(73) Patentinhaber: GM Global Technology Operations LLC, Detroit, MI 48265-3000 (US)
(72) Erfinder: Stenz, Karl, DE-65189 Wiesbaden (DE)
(74) Vertreter: Daniel, Ulrich W.P.

(56) Entgegenhaltungen:
- EP-A- 1 386 783
- DE-U1- 29 504 245
- GB-A- 2 130 990
- US-A- 4 538 851
- US-A- 6 109 586
- US-A1- 2003 011 909

## Beschreibung

Die Erfindung betrifft einen Außenspiegel für ein Kraftfahrzeug, zum Beispiel für ein Personenkraftfahrzeug.

Außenspiegel an einem Kraftfahrzeug verfügen über eine Halterung, mit der sie an der Karosserie befestigt werden und die das Spiegelgehäuse trägt. Außenspiegel und Halterung sind vielfach zweiteilig ausgebildet und sollen in hohem Maße den ästhetischen Ansprüchen des Kunden genügen.

US 2003/0011909 A1 beschreibt ein Verfahren zum Herstellen eines Fahrzeug-Außenspiegels umfassend ein Gehäuse mit einem Spiegelgehäuse und einer Befestigungsstütze, wobei das Spiegelgehäuse und die Befestigungsstütze einstückig ausgebildet sind.

GB 2130990 A beschreibt einen Außenspiegel, wobei eine µ-förmige Halterung aus zwei streben besteht.

Es ist eine Aufgabe einer Ausführungsform der Erfindung, einen Außenspiegel und ein korrespondierendes Herstellungsverfahren bereitzustellen, mit dem ein vorgegebenes Design möglichst unverfälscht technisch realisiert werden kann.

Die Lösung dieser Aufgabe erfolgt mit den Merkmalen der unabhängigen Ansprüche. Vorteilhafte Weiterbildungen werden durch die Merkmale der abhängigen Ansprüche wiedergegeben.

Ein erster Aspekt der Erfindung bezieht sich auf einen Außenspiegel. Eine erste Ausführungsform desselben umfasst ein Spiegelgehäuse mit einer zugeordneten V-, oder L-förmigen Halterung, wobei Spiegelgehäuse und Halterung einstückig ausgebildet sind und die Halterung zwei in einen Befestigungsflansch mündende Streben besitzt.

Durch die einstückige Ausbildung werden Trennlinien, Flansche, Verschweißungsstellen etc., nachfolgend Übergangsbereiche genannt, die ansonsten bei einer zweiteiligen Ausbildung vorlägen, vermieden. Auf diese Weise kommen die genannten technisch bedingten Übergangsbereiche zwischen Halterung und Spiegelgehäuse nicht vor und müssen weniger Kompromisse bei der technischen Umsetzung des Designs eingegangen werden. Insofern erweitert die genannte Ausbildung die Gestaltungsmöglichkeiten bei der Umsetzung eines Außenspiegeldesigns in ein konkretes Produkt. Weiterhin kommt es wegen der Vermeidung der oben genannten Übergangsbereiche zu weniger Windgeräuschen im Fahrbetrieb und entfällt durch die einstückige bzw. einteilige Ausbildung des Außenspiegels ein Montageschritt, der im Verbinden von Halterung und Spiegelgehäuse besteht. Die Halterung kann so gewählt sein, dass sie zwei in einen Befestigungsflansch mündende Streben besitzt. Experimente im Windkanal haben ergeben, dass diese Ausbildung der Halterung mit Spiegelgehäuse ein günstiges Geräuschverhalten bei gleichzeitig harmonischen Übergängen und gefälligen Proportionen zeigt.

Eine Ausführungsform sieht ferner vor, dass Spiegelgehäuse und Halterung spritzgegossene Kunststoffteile sind, sodass im Wege des Spritzgießens eine Einheit aus Halterung und Spiegelgehäuse hergestellt wird.

In einer Ausgestaltung besitzt die Halterung ein kunststoffumspritztes V-, U- oder L-förmiges Einlegeteil. Durch die Ummantelung eines dauerhaft in der Halterung verbleibenden Einlegeteils mit spritzgegossenem Kunststoff gelingt die Bereitstellung einer V-, oder L-förmigen Halterung. Bei einem direkten Spritzgießen ohne Einlegeteil bestünde ansonsten das Problem, wie ein Abformen der zusammenlaufenden Streben in der Spritzgießmaschine zu gewährleisten wäre. Das Einlegeteil stabilisiert die Halterung mechanisch und erlaubt bietet die Möglichkeit, den Außenspiegel über das Einlegeteil an der Karosserie zu befestigen.

In einer weiteren Ausführungsform besteht das Einlegeteil aus glasfaserverstärktem Kunststoff. Durch diese Wahl wird ein Einlegeteil geschaffen, das zum einen in der Herstellung hinreichend thermisch stabil ist, und sich insofern bei den beim Spritzgießen vorherrschenden Temperaturen von zum Beispiel 200 ° C bis 230 ° C nicht verformt. Andererseits ist das Einlegeteil hinreichend steif, um den beim Spritzgießen ausgeübten Spritznach- bzw. Schließdruck von zum Beispiel 600 bar bis 1000 bar standzuhalten, ohne dass seine Innenstruktur einbricht standzuhalten. Durch die genannte Innenstruktur erfolgt eine Verbindung des Spiegelgehäuses mit der Fahrzeugkarosserie, zum Beispiel über ein elektrisches Kabel, mit dem ein im Spiegelgehäuse aufnehmbarer Aktuator für die Neigungsverstellung des Spiegels schaltbar ist.

Durch eine geeignete Wahl des Glasfaseranteils können die Temperaturstabilität und die Stabilität gegenüber dem Spritznachdruck des Spritzgießprozesses in weitem Maße eingestellt werden. Geeignete Werte des Glasfaseranteils sind zum Beispiel 40 Gewichtsprozent bis 60 Gewichtsprozent und zum Beispiel 50 Gewichtsprozent.

Ein weiterer Aspekt der Erfindung bezieht sich auf ein Verfahren zur Herstellung eines Außenspiegels für ein Kraftfahrzeug. Das Verfahren umfasst die Schritte Bereitstellen eines V- U- oder L-förmigen Einlegeteils und räumliches Fixieren des Einlegeteils in einem Werkzeug einer Spritzgießmaschine. In einem weiteren Schritt erfolgt ein Ummanteln des Einlegeteils mit einem Kunststoff durch Spritzgießen, wodurch ein Außenspiegel mit Spiegelgehäuse und Halterung entsteht, bei dem Spiegelgehäuse und Halterung einstückig ausgebildet sind, wobei die Halterung zwei in einen Befestigungsflansch mündende Streben besitzt.

Das Bereitstellen des Einlegeteils kann seine Herstellung umfassen. Das Einlegeteil kann zweiteilig ausgebildet sein und umfasst mindestens einen Hohlraum, beispielsweise in der Form eines Kabelkanals, zur Herstellung einer Verbindung, zum Beispiel einer elektrischen Verbindung, von der Karosserie zum inneren Bereich des Spiegelgehäuses. Das Einlegeteil ist hierbei hinreichend stabil ausgebildet, um dem Fahrtwind eines Kraftfahrzeugs standzuhalten, was zum Beispiel durch Ausbildung von Versteifungsrippen verwirklicht sein kann.

Wie oben ausgeführt können bei der Wahl zweier Streben, die ein V oder L bilden, die Streben in einen Befestigungsflansch münden. Das Einlegeteil kann sich hierbei auch in den Befestigungsflansch hinein erstrecken, um diesen mechanisch zu stabilisieren. Der Befestigungsflansch nimmt Befestigungsmittel für eine mechanische Verbindung des Außenspiegels mit der Fahrzeugkarosserie, z.B. der Türaußenhaut, auf. Als Befestigungsmittel kann ein Scharnier oder können Klipse für eine Klipsverbindung gewählt werden. Durch die Befestigung an der Karosserie, z.B. der Türaußenhaut, entfällt der Einsatz eines speziellen Fensterdreiecks am unteren Abschluss der A-Säule, was die Fensterfläche vergrößert und den Sichtbereich von Fahrer oder Beifahrer vergrößert.

Nach dem Bereitstellen des Einlegeteils wird dieses in dem Werkzeug einer Spritzgießmaschine fixiert, und wird anschließend das Einlegeteil durch Spritzgießen mit einem Kunststoff ummantelt. Das Einlegeteil verbleibt insofern dauerhaft in der Halterung und erhöht dabei dessen Festigkeit.

Das genannte Herstellungsverfahren ermöglicht die detailgetreue Wiedergabe eines Außenspiegeldesigns durch einen spritzgegossenen Außenspiegel ohne die o.g. Übergangsbereiche und insofern mit weniger Kompromissen bei der technischen Umsetzung. Durch den Einsatz eines Einlegeteils wird zudem das Potenzial geschaffen, einen Außenspiegel herzustellen, der eine V- oder L-förmige Halterung mit zwei das V oder L bildende stegförmige Abschnitte aufweist.

Ein weiterer Aspekt der Erfindung bezieht sich auf ein Kraftfahrzeug, beispielsweise einen Pkw, mit einem Außenspiegel wie oben beschrieben.

Weitere Merkmale und Vorteile der beanspruchten Erfindung werden aus der folgenden detaillierten Beschreibung mit Bezug auf die beigefügten Zeichnungen erkennbar die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigt:
- Fig. 1a: eine Seitenansicht einer Ausführungsform eines Außenspiegels von vorne;
- Fig. 1b: eine Seitenansicht einer Ausführungsform des Außenspiegels der Fig. 1a von hinten;
- Fig. 2a: eine Seitenansicht einer Ausführungsform eines Einlegeteils aus zwei Teilen,
- Fig. 2b: das Einlegeteil der Fig. 2a in zusammengebauten Zustand,
- Fig. 3: ein Formwerkzeug zum Spritzgießen des Außenspiegels,
- Fig. 4: ein Kraftfahrzeug mit einem Außenspiegel.

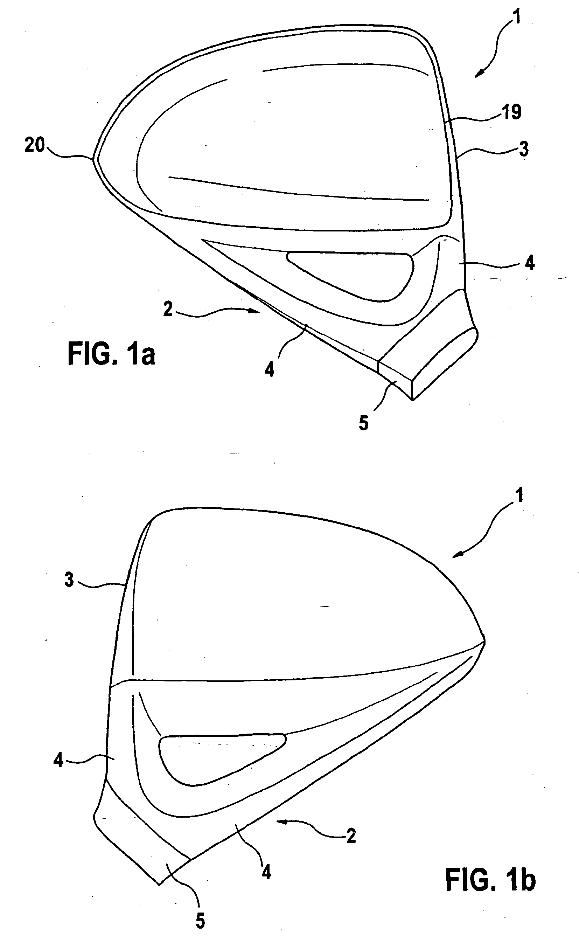

Figur 1 zeigt einen Außenspiegel 1 mit Blick von vorne, d.h. mit Blick auf die (noch nicht eingefügte) Spiegelfläche. Man erkennt eine einteilige Ausbildung des aus eine V-förmige Halterung 2 und ein Spiegelgehäuse 3 umfassenden Außenspiegels 1. Durch die V-Form entstehen harmonische Übergänge und gefällige Gehäuseproportionen ohne störende Trennlinien, zum Beispiel Trennlinien im Übergangsbereich von Halterung 2 und Spiegelgehäuse 3. Durch die einteilige Ausbildung von Halterung 2 und Spiegelgehäuse 3 wird ein Montageschritt zur mechanischen Verbindung dieser beiden Teile eingespart. Gleichzeitig wird eine Verschlechterung des Geräuschverhaltens durch die genannten Trennlinien vermieden.

Die V-förmige Halterung 2 besteht aus zwei etwa fingerdicken Streben 4, die in einem Befestigungsflansch 5 münden. Über den schräg zur Horizontalen angeordneten Befestigungsflansch 5 wird der Außenspiegel 1 an der Karosserie befestigt. Hierzu verfügt der Befestigungsflansch 5 über geeignete Befestigungsmittel, zum Beispiel über Klipse für eine Klipsverbindung oder über ein Scharnier. Wird der Außenspiegel 1 an der Türaußenhaut befestigt, so kann unter der Türaußenhaut eine Verstärkung vorgesehen sein, um die mechanische Anbindung zu verbessern.

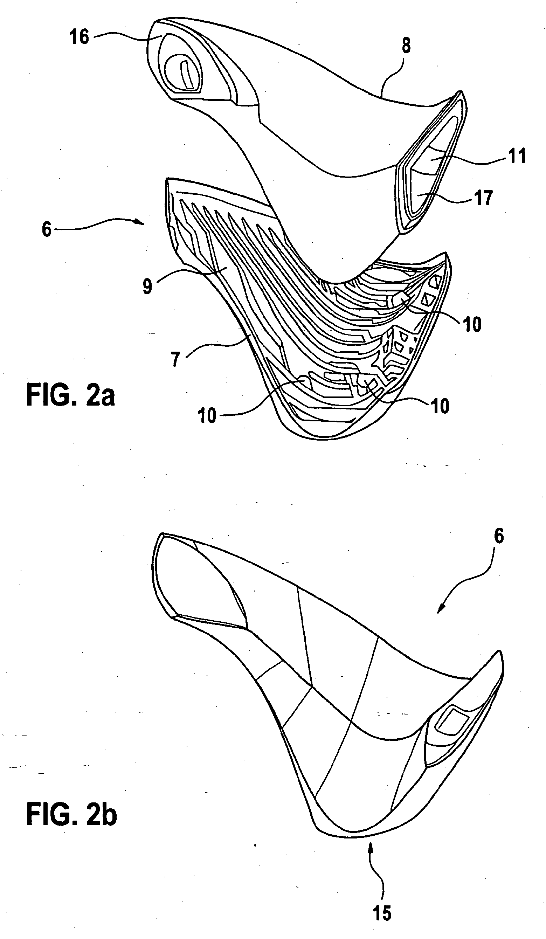

Im Inneren des spritzgegossenen Außenspiegels 1, und zwar in der Halterung 2, befindet sich ein Einlegeteil 6. Das Einlegeteil 6 wird in Figuren 2a und 2b gezeigt.

Das Einlegeteil 6 ist, vergleiche Figur 2a, zweistückig ausgebildet und besteht aus Basisteil 7 und Oberteil 8, die über nicht gezeigte Stecknasen relativ zueinander fixiert werden und dann einen Hohlraum einschließen. Fig. 2b zeigt das aus Basisteil 7 und Oberteil 8 zusammengebaute Einlegeteil 6, wie es beim Spritzgießvorgang zum Einsatz kommt.

Das Basisteil 7 verfügt innenseitig über Rippen 9, mit denen die erforderliche mechanische Stabilität gewährleistet wird. Gleichzeitig wird durch die Versteifungsrippen 9 gewährleistet, dass das Einlegeteil 6 während des Spritzgießvorgangs des Außenspiegels 1 nicht durch den Spritznachdruck mechanisch deformiert bzw. der oben genannte Hohlraum für die Kabeldurchführung einbricht. Der Spritznachdruck, mit dem Einfallstellen auf der Außenseite des Außenspiegels 1 minimiert werden, ist abhängig vom Kunststoffmaterial und kann ca. 600 bar bis ca. 800 bar betragen.

Vier durchgehende Öffnungen 10, von denen drei in der Figur 2a zu erkennen sind, dienen dazu, Klipsbolzen einer Klipsbefestigung aufzunehmen. Der Bereich der Öffnungen 10 erstreckt sich insofern in den Befestigungsflansch 5 hinein.

Das Einlegeteil 6 besteht aus Kunststoff PBT mit einem Glasfaseranteil von 50 Gew%. Es besitzt einen Kabelkanal 11 für die elektrische Kontaktierung einer im Spiegelgehäuse 2 aufnehmbaren Verstellmechanik sowie über Löcher zum Ablassen eingetretenen Wassers (jeweils nicht dargestellt).

Das Einlegeteil besitzt keine Hinterschneidungen, sodass es selbst in der Spritzgießanlage mit einem einfachen, sich längs einer Linie bewegbaren Werkzeugs, d.h. mit einem Auf-/Zu-Werkzeug, ohne Einsatz eines Schiebers mit hoher Taktrate kostengünstig herstellen lässt.

Der Einsatz des Einlegeteils schafft eine größere Freiheit bei der geometrischen Wahl der Halterung 2. Erfolgt die Herstellung des Außenspiegels 1 durch Spritzgießen, so werden hierdurch Probleme beim Abformen vermieden. So können auch in einen Befestigungsflansch zusammenlaufende Streben mühelos realisiert werden, so zum Beispiel V- oder L-förmige Halterungen.

Das Spiegelgehäuse 3, und auch der darin vorgesehene Spiegel selbst, hat bei einem Blick senkrecht zur Spiegelfläche in etwa die Form eines liegenden, spitz zulaufenden Zuckerhuts. Es zeigt, wenn an der Türaußenhaut montiert, innenseitig eine weitgehend geradlinig verlaufende Begrenzung in Form einer Basislinie 19. Nach außen hin besitzt es eine Spitze 20. Die Spiegelfläche ist damit in etwa dreieckig. In Windkanalmessungen bestätigte sich für den Außenspiegel 1 mit diesem Spiegelgehäuse 3 ein gutes aerodynamisches Verhalten. Gleichzeitig zeigte sich, dass die gewählte Form des Außenspiegels Luftwirbel erzeugte, die eine Verschmutzung der Vordertürfensterscheibe gering hält.

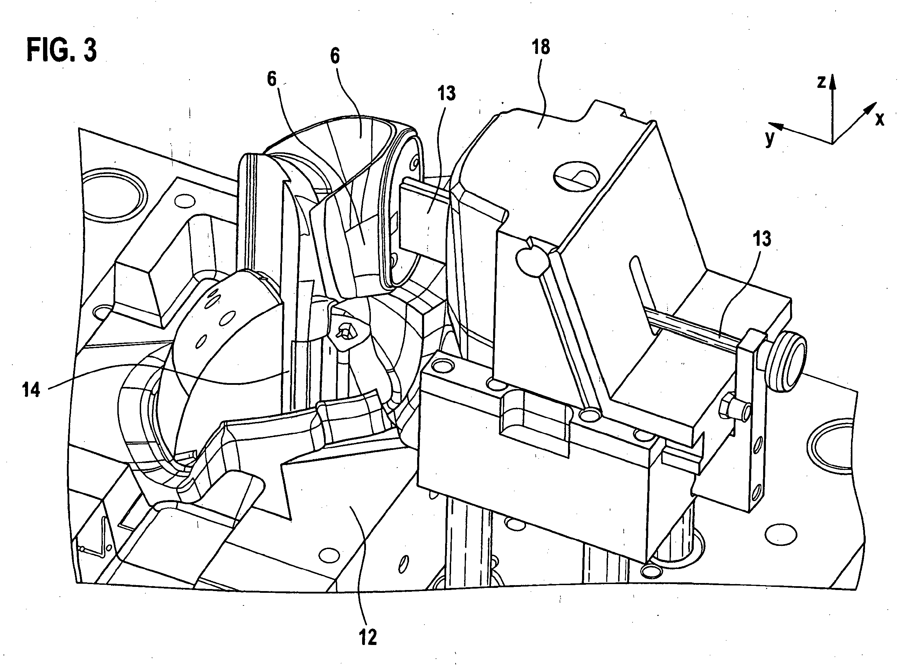

Figur 3 zeigt ein (Form-) Werkzeug 12 einer Spritzgießmaschine zur Herstellung des Außenspiegels 1. Das Werkzeug 12 besitzt zwei Schieber 13 und 14 zur Fixierung des Einlegeteils 6. Der Schieber 13 greift an einer ersten Flanschfläche 15 des Einlegeteils 6 an, die mit Bezug auf Figur 2b auf der Unterseite des Einlegeteils 6 liegt. Der Schieber 14 stützt die Flanschflächen 16 und 17 ab. Mithilfe der zentralen Aufnahme 18 fährt das Einlegeteil in das Werkzeug 12 ein.

Zur Benutzung des Werkzeugs 6 wird zunächst das Einlegeteil 6 bereitgestellt. Hierzu kann es selbst über einen Spritzgießvorgang hergestellt werden. Als Material für das Einlegeteil 6 kann PBT gewählt werden.

Das bereitgestellte Einlegeteil 6 wird dann im Werkzeug 12 mithilfe der Schieber 13, 14 fixiert. Dann fährt das Gegenformwerkzeug in (-z)-Richtung zum Werkzeug 12 und wird das Einlegeteil 6 mit einem Kunststoff ummantelt. Um einen Außenspiegel mit einer glatten Außenfläche zu erhalten, kann ein Nachdruck zwischen 600 bar und 800 bar gewählt werden.

Nach der Entnahme des einstückig mit der Halterung ausgebildeten Außenspiegels wird dieser noch mit den üblichen Bauteilen wie Spiegelglas, Heizfolie, Verstellmechanik etc. bestückt.

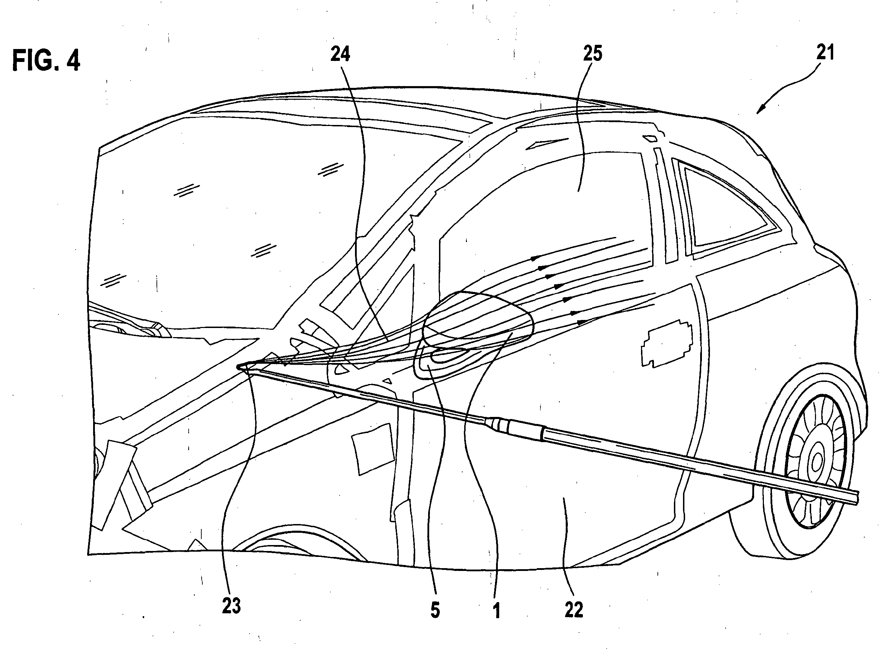

Figur 4 zeigt ein Kraftfahrzeug 21 mit einem Außenspiegel 1 in einem Windkanal, der mit seinem Befestigungsflansch 5 an der Außenhaut der Vordertür 22 befestigt ist. Über eine Düse 23 strömt Luft in Form eines Luftstroms 24 gegen den Außenspiegel 1. Die Windkanalmessungen belegen ein gutes aerodynamisches Verhalten und ein gutes Geräuschverhalten ohne Pfeifen und dergleichen. Der Luftstrom hinter dem Außenspiegel 1 zeigte Luftwirbel, die eine Verschmutzung der Vordertürfensterscheibe 25 gering hält.

### Bezugszeichenliste

- 01: Außenspiegel
- 02: Halterung
- 03: Spiegelgehäuse
- 04: Strebe
- 05: Befestigungsflansch
- 06: Einlegeteil
- 07: Basisteil
- 08: Oberteil
- 09: Versteifungsrippe
- 10: Öffnung
- 11: Kabelkanal
- 12: Werkzeug
- 13: Schieber
- 14: Schieber
- 15: Flanschfläche
- 16: Flanschfläche
- 17: Flanschfläche
- 18: zentrale Aufnahme
- 19: Basislinie
- 20: Spitze
- 21: Kraftfahrzeug
- 22: Vordertür
- 23: Düse
- 24: Luftstrom
- 25: Vordertürfensterscheibe

## Patentansprüche

1. Außenspiegel (1) für ein Kraftfahrzeug, umfassend ein Spiegelgehäuse (3) mit zugeordneter Halterung (2), wobei Spiegelgehäuse (3) und Halterung (2) einstückig ausgebildet sind, **dadurch gekennzeichnet, dass** die Halterung (2) V-förmig oder L-förmig ist, und dass die Halterung (2) zwei in einen Befestigungsflansch (5) mündende Streben (4) besitzt.

2. Außenspiegel nach Anspruch 1, bei dem Spiegelgehäuse (3) und Halterung (2) spritzgegossene Kunststoffteile sind.

3. Außenspiegel nach einem der vorherigen Ansprüche, bei dem die Halterung (2) ein kunststoffumspritztes V- oder L förmiges Einlegeteil (6) umfasst.

4. Außenspiegel nach einem der vorherigen Ansprüche, bei dem das Einlegeteil (6) ein glasfaserverstärkter Kunststoff ist.

5. Außenspiegel nach einem der vorherigen Ansprüche, bei dem das Einlegeteil (6) einen Glasfaseranteil von ca. 40 Gew% bis ca. 60 Gew% hat.

6. Außenspiegel nach einem der vorherigen Ansprüche, bei dem das Spiegelgehäuse (3) bezogen auf eine Blickrichtung senkrecht zur Soll-Spiegelfläche in etwa die Form eines liegenden, spitz zulaufenden Zuckerhuts hat.

7. Kraftfahrzeug mit einem Außenspiegel gemäß einem der vorherigen Ansprüche.

8. Verfahren zum Herstellen eines Kfz-Außenspiegels, umfassend die Schritte:
a) Bereitstellen eines V- oder L-förmigen Einlegeteils (6),
b) Fixieren des Einlegeteils (6) in einem Werkzeug (12) einer Spritzgießmaschine,
c) Ummanteln des Einlegeteils (6) mit einem Kunststoff durch Spritzgießen, wobei ein Außenspiegel entsteht, bei dem Spiegelgehäuse (3) und Halterung (2) einstückig ausgebildet sind, wobei die Halterung (2) V- oder L-förming ist und zwei in einen Befestigungsflansch (5) mündende Streben (4) besitzt.

9. Verfahren nach Anspruch 8, bei dem der Nachdruck beim Spritzgießvorgang zwischen 600 bar und 800 bar gewählt ist.

## Claims

1. An exterior mirror (1) for a motor vehicle, comprising a mirror housing (3) with associated holder (2), with the mirror housing (3) and the holder (2) being integrally arranged, **characterized in that** the holder (2) is V-shaped or L-shaped and that the holder (2) comprises two supports (4) entering into a mounting flange (5).

2. An exterior mirror according to claim 1, wherein the mirror housing (3) and the holder (2) are injection-molded plastic parts.

3. An exterior mirror according to one of the preceding claims, wherein the holder (2) comprises a V-shaped or L-shaped insertion part (6) which is extrusion-coated in plastic.

4. An exterior mirror according to one of the preceding claims, wherein the insertion part (6) is a glass-fiber-reinforced plastic.

5. An exterior mirror according to one of the preceding claims, wherein the insertion part (6) has a fraction of glass fibers from approx. 40 percent by weight to approx. 60 percent by weight.

6. An exterior mirror according to one of the preceding claims, wherein the mirror housing (3), with respect to the direction of view perpendicularly to the predetermined mirror surface, approximately has the shape of a horizontal tapering sugar cone.

7. A motor vehicle comprising an exterior mirror according to one of the preceding claims.

8. A method for producing an exterior mirror of a motor vehicle, comprising the following steps:
a) providing a V-shaped or L-shaped insertion part (6);
b) fixing the insertion part (6) in a die (12) of an injection-molding machine;
c) coating the insertion part (6) with a plastic by injection-molding, with an exterior mirror being produced in which the mirror housing (3) and the holder (2) are integrally arranged, with the holder (2) being V-shaped or L-shaped and comprising two supports (4) entering into a mounting flange (5).

9. A method according to claim 8, wherein the dwell pressure during the injection-molding process is chosen between 600 bar and 800 bar.

## Revendications

1. Rétroviseur extérieur (1) pour un véhicule à moteur, comprenant une logement de rétroviseur (3) avec une fixation (2) associée, le logement de rétroviseur (3) et la fixation (2) étant formés d'un seul tenant, **caractérisé en ce que** la fixation (2) est en forme de V ou en forme de L et **en ce que** la fixation (2) possède deux barrettes (4) aboutissant à une bride de fixation (5).

2. Rétroviseur extérieur selon la revendication 1, dans lequel le logement de rétroviseur (3) et la fixation (2) sont des pièces en plastique moulées par injection.

3. Rétroviseur extérieur selon l'une des revendications précédentes, dans lequel la fixation (2) comprend un insert (6) en forme de V ou de L enrobé de plastique par injection.

4. Rétroviseur extérieur selon l'une des revendications précédentes, dans lequel l'insert (6) est un plastique armé de fibres de verre.

5. Rétroviseur extérieur selon l'une des revendications précédentes, dans lequel l'insert (6) contient une proportion de fibres de verre d'environ 40 % en poids à environ 60 % en poids.

6. Rétroviseur extérieur selon l'une des revendications précédentes, dans lequel le logement de rétroviseur (3) a approximativement la forme d'un pain de sucre pointu couché, par rapport à un sens du regard perpendiculaire à la surface théorique du miroir.

7. Véhicule à moteur avec un rétroviseur extérieur selon l'une des revendications précédentes.

8. Procédé pour la fabrication d'un rétroviseur extérieur de véhicule à moteur, comprenant les étapes de :
a) préparation d'un insert (6) en forme de V ou de L,
b) fixation de l'insert (6) dans un outil (12) d'une machine de moulage par injection,
c) enrobage de l'insert (6) avec un plastique par moulage par injection, ce qui produit un rétroviseur extérieur dans lequel le logement de rétroviseur (3) et la fixation (2) sont formés d'un seul tenant, la fixation (2) étant en forme de V ou de L et possédant deux barrettes (4) aboutissant à une bride de fixation (5).

9. Procédé selon la revendication 8, dans lequel la pression de maintien lors de l'opération de moulage par injection est réglée entre 600 bars et 800 bars.
